# FASCICULE DE BREVET EUROPEEN

(11) **EP 2 087 645 B1**
(45) Date de publication et mention de la délivrance du brevet: **02.01.2019**
(21) Numéro de dépôt: 07858675.7
(22) Date de dépôt: 08.11.2007
(51) Int. Cl.: H04L 12/24, H04L 12/723, H04L 12/911, H04L 12/913, H04L 12/801

(54) **RESTAURATION D'UN SYSTEME DE RESERVATION DE SERVICE D'UN RESEAU APRES DEFAILLANCE**
WIEDERHERSTELLUNG EINES DIENSTBUCHUNGSSYSTEMS IN EINEM NETZWERK NACH EINEM DEFEKT
RESTORING A SERVICE BOOKING SYSTEM IN A NETWORK AFTER FAILURE

(30) Priorité: 10.11.2006 FR 0654843
(43) Date de publication de la demande: 12.08.2009
(73) Titulaire: Thomson Licensing, 92130 Issy-les-Moulineaux (FR)
(72) Inventeur: HUGUIES, Bertrand, 35700 Rennes (FR); MACE, Gael, 35850 Langan (FR); DEFRANCE, Serge, 35700 Rennes (FR)
(74) Mandataire: Huchet, Anne
(86) Numéro de dépôt international: PCT/FR2007/052314
(87) Numéro de publication internationale: WO 2008/056088

(56) Documents cités:
- US-A1- 2004 128 397
- US-A1- 2005 063 701
- CHI-HSIANG YEH: "Scalable, adaptive, and reliable resource management in high-speed and mobile networks" COMPUTER COMMUNICATIONS AND NETWORKS, 2001. PROCEEDINGS. TENTH INTERNA TIONAL CONFERENCE ON 15-17 OCT. 2001, PISCATAWAY, NJ, USA,IEEE, 15 octobre 2001 (2001-10-15), pages 182-189, XP010562093 ISBN: 978-0-7803-7128-6
- LU SHEN ET AL: "Centralized vs. distributed connection management schemes under different traffic patterns in wavelength-convertible optical networks" ICC 2002. 2002 IEEE INTERNATIONAL CONFERENCE ON COMMUNICATIONS. CONFERENCE PROCEEDINGS. NEW YORK, NY, APRIL 28 - MAY 2, 2002; [IEEE INTERNATIONAL CONFERENCE ON COMMUNICATIONS], NEW YORK, NY : IEEE, US, vol. 5, 28 avril 2002 (2002-04-28), pages 2712-2716, XP010589974 ISBN: 978-0-7803-7400-3

## Description

### Domaine de l'invention

La présente invention se rapporte au domaine des réseaux.

La présente invention se rapporte plus particulièrement à un procédé de restauration d'un système de réservation de service d'un réseau après défaillance. Le procédé s'applique aux réseaux sans boucle (« *loop-free networks* »), c'est-à-dire qu'à un instant donné, il existe un chemin unique entre deux points du réseau et que ce chemin unique est seulement modifié par un changement de topologie du réseau. Au sens de la présente invention, un système de réservation de service est un système centralisé qui assure un service sur un chemin du réseau entre deux points d'un réseau sans boucle.

### Etat de la technique

Bien souvent, les systèmes de l'art antérieur ne prennent pas en compte le fait que des défaillances du réseau peuvent avoir lieu. Lorsqu'une défaillance a lieu, le système de réservation de service connaît un « crash » et ne revient pas à un état stable.

L'art antérieur connaît déjà des procédés et systèmes de restauration de lien sur un réseau, c'est-à-dire des procédés et système qui consistent à rétablir la transmission de données entre deux points d'un réseau.

Dans un réseau sans boucle, il y a un seul chemin entre deux points du réseau. Une défaillance du réseau coupe donc les transmissions de données à l'endroit de la défaillance. Le trafic ne peut pas être re-routé dans un réseau sans boucle. Le trafic peut reprendre si le réseau met de nouveau en place des liens pour transmettre les données. Ceci peut être fait « manuellement » par l'ajout d'équipement réseau, ou de manière protocolaire, comme le fait le protocole STP (« *Spanning Tree Protocol* ») qui recherche les liens redondants qui avaient été auparavant désactivés, pour créer le réseau sans boucle. Cet aspect de rétablissement de la transmission de donnée fonctionne aujourd'hui et ne fait pas l'objet de la présente invention.

Lorsqu'un système centralisé gère sur un réseau la réservation d'un service, c'est-à-dire contrôle l'admission au service et assure le service demandé, il maintient à jour l'état de ses réservations sur le réseau. Lorsqu'il y a une défaillance réseau, la topologie du réseau peut-être modifiée : suppression d'un noeud du réseau, dégradation du service sur certains liens ou bien disparition de parties entières du réseau. De même, il est possible que de nouveaux éléments apparaissent, notamment après une défaillance réseau : ajout d'un noeud du réseau, apparition de nouveaux liens ou encore amélioration du service sur un lien.

Dans le cas d'une défaillance réseau, les informations concernant les réservations de service peuvent ne plus être cohérentes, par exemple pour un service réservé sur une partie du réseau disparue. Dans ce cas là, il est nécessaire de mettre en place des mécanismes internes au gestionnaire de service pour rendre de nouveau cohérentes les informations et plus généralement la gestion du service.

L'art antérieur connaît, par la demande de brevet américain US 2005/0063701, un procédé et un système pour restaurer des ressources lors de la survenue d'un événement de pertes de rafale de données dans des réseaux à communication optique basés sur le protocole WDM (multiplexage en longueur d'onde « *Wavelength Division Multiplexing »* en anglais). Cette demande de brevet américain décrit un mécanisme de réservation de ressource réparti au niveau de chaque équipement de réseau, donc une architecture distribuée pour ce mécanisme. Ce document de l'art antérieur introduit un moyen de refuser et/ou stopper une communication lorsque cette dernière entraîne au niveau d'au moins un des équipements de coeur de réseau, la détection d'une défaillance (engorgement du réseau, lien rompu, ...). L'architecture mise en oeuvre dans cette demande de brevet américain est entièrement distribuée et ne repose par sur une connaissance centralisée de la topologie. Le contrôle/commande de ce mécanisme antérieur utilise une longueur d'onde attribuée uniquement à l'échange de données système.

Le document US2004/0128397 décrit un procédé de vérification de transmission de ressources dans un réseau de communication par paquets.

La présente invention entend remédier aux inconvénients de l'art antérieur en proposant un procédé qui permet de remettre en fonctionnement un gestionnaire de services dans un réseau sans boucle, ce qui implique des opérations internes au gestionnaire.

### Exposé de l'invention

La présente invention concerne un mécanisme centralisé de recouvrement des réservations de ressources établie par rapport à une gestion centralisée de la topologie. Lorsque le gestionnaire de topologie détecte un changement, il en informe le gestionnaire de ressources qui détecte les conflits/défaillances éventuels introduit par cette nouvelle topologie sur les réservations de ressources précédemment établies et tente de les résoudre automatiquement en contactant les noeuds concernés ou en prévenant l'utilisateur du système. Il est à noter que le contrôle/commande de ce mécanisme utilise un protocole de mode paquet utilisant un identifiant unique (adresse, numéro de port) attribué à l'échange de ces paquets.

La présente invention repose sur une connaissance centralisée de la topologie, alors que l'architecture mise en oeuvre dans la demande de brevet américain US 2005/0063701 est entièrement distribuée. US2004128397 décrit un procédé réglant l'impact de changements de topologie dans un réseau géré sur un système de réservation de ressources du réseau. A cet effet, la présente invention concerne, dans son acception la plus générale, un procédé de restauration d'un procédé de réservation de service selon la revendication 1.

Des modes de réalisation avantageux de ce procédé sont couverts par les revendications dépendantes.

Avantageusement, ledit procédé comporte en outre une troisième étape au cours de laquelle des noeuds du réseau disparaissent du système de réservation de service.

Selon un mode de mise en oeuvre particulier, la disparition des noeuds au niveau du système de réservation de service a lieu à l'expiration d'un délai prédéterminé.

De préférence, une action externe désactive les éléments impliqués dans les réservations inactives.

Selon une variante, ladite action externe est manuelle.

Selon une autre variante, ladite action externe provient d'un module externe.

La présente invention se rapporte également à un système de réservation de service d'un réseau selon la revendication 7. Des modes de réalisation préférés sont revendiqués dans les revendications dépendantes.

### Brève description des dessins

On comprendra mieux l'invention à l'aide de la description, faite ci-après à titre purement explicatif, d'un mode de réalisation de l'invention, en référence aux figures annexées :
- la Figure 1 illustre le cas où un flux est réservé ;
- la Figure 2 illustre le cas où un utilisateur d'un service quitte le réseau ;
- la Figure 3 représente un exemple de réseau avec différents flux réservés ;
- la Figure 4 représente le réseau de la Figure 3 dans lequel un commutateur connaît une défaillance ;
- la Figure 5 représente le réseau de la Figure précédente dans lequel on observe un remaniement de la topologie ; et
- la Figure 6 illustre les différentes étapes du procédé selon la présente invention.

### Description détaillée des modes de réalisation de l'invention

Le procédé selon la présente invention s'applique aux réseaux sans boucle (« *loop-free networks* »), c'est-à-dire qu'à un instant donné, il existe un chemin unique entre deux points du réseau et que ce chemin unique est seulement modifié par un changement de topologie du réseau. Par défaillance du réseau, on entend, au sens de la présente invention, une modification dans la topologie du réseau qui rend complètement inutilisable(s) ou progressivement dégradé(s) un ou plusieurs lien(s) du réseau. Au sens de la présente invention, un système de réservation de service est un système centralisé qui assure un service sur un chemin du réseau entre deux points d'un réseau sans boucle.

Dans la présente invention, le gestionnaire de service se base sur une entité lui permettant d'avoir une vue à jour de la topologie du réseau qu'il gère.

Le procédé selon la présente invention est avantageusement mis en oeuvre dans un système comprenant :
- un réseau sans boucle ; et
- un gestionnaire de service centralisé situé sur un noeud du réseau.

Des réservations de service ont lieu sur un chemin entre deux noeuds du réseau. Le trafic de communication entre le gestionnaire de service et les équipements de réseau qui envoient des requêtes de réservation de service ont la priorité la plus haute.

Il existe plusieurs types de messages de réservation de service, parmi lesquels on trouve :
- la nouvelle réservation de service ; et
- la libération d'une réservation de service.

Le gestionnaire de service maintient une liste de réservations de service accordées. Cette liste peut avoir la forme suivante :

**Tableau 1**

| **Identité** | **Demandeur du service** | **Utilisateur 1 du service** | **Utilisateur 2 du service** | **Quantité** |
|---|---|---|---|---|
| Identifiant de réservation | Noeud du réseau | Noeud du réseau | Noeud du réseau | Quantification du service demandé |

Le demandeur du service peut être différent des deux noeuds du réseau qui utilisent le service.

Certains événements peuvent rendre le système de réservation de service instable.

Lorsqu'un utilisateur d'un service souhaite quitter le réseau, il doit libérer toutes ses réservations de service avant de quitter le réseau.

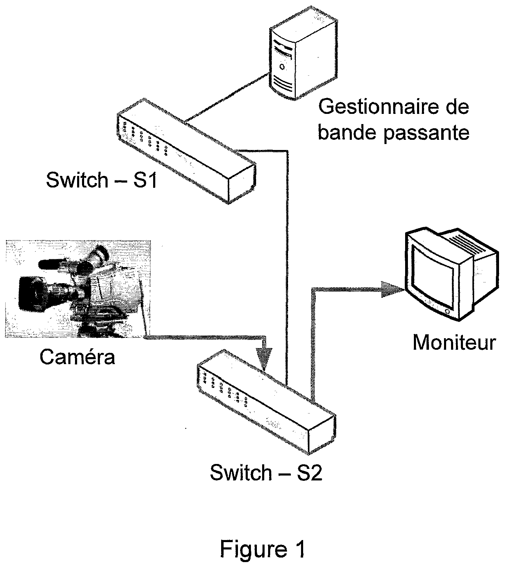

Sur la Figure 1, on voit une caméra (utilisateur de service) qui a demandé une réservation de bande passante vers le moniteur au gestionnaire de bande passante. Cette réservation a été accordée et le réseau fonctionne correctement. Les échanges de données transitent par le commutateur (switch) S2.

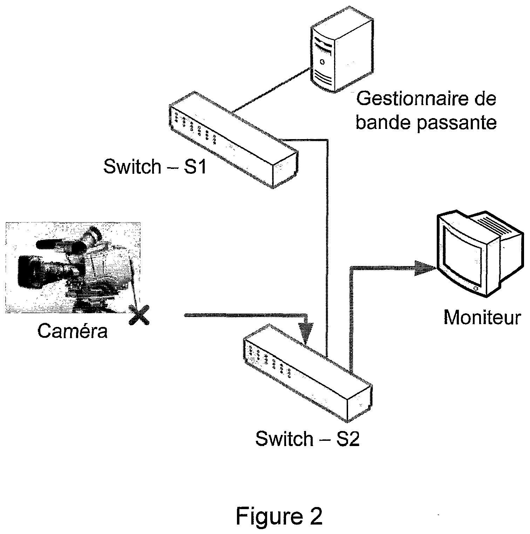

Sur la Figure 2, la caméra quitte le réseau sans libérer la réservation de service. Ici, la réservation est toujours prise en compte par le gestionnaire de bande passante mais n'existe pas réellement.

Le gestionnaire de service voit sur sa topologie que l'utilisateur de service n'est plus là et peut envisager deux scénarios :
- Soit l'utilisateur de service a terminé son activité et ne souhaite plus utiliser le service. Le gestionnaire de service doit dans ce cas libérer la réservation.
- Soit l'utilisateur de service a rencontré un problème et ne poursuit pas son activité pour le moment, mais souhaite poursuivre son activité plus tard. Le gestionnaire de service peut dans ce cas ne pas libérer la réservation.

On peut choisir de libérer la réservation de service pour les deux scénarios : l'utilisateur de service devra, pour réutiliser le service, effectuer une nouvelle requête de réservation de service. Ce cas présente un problème si l'utilisateur de service quitte le réseau et revient, en pensant que sa réservation de service est toujours active. Dans cette situation, l'utilisateur (de service) utilise un service qui n'est pas réservé.

Dans l'exemple précédent, la caméra de la Figure 2 pourrait ne pas avoir détecté que le lien ne fonctionne plus, et donc pourrait, une fois le lien rétablit, toujours émettre du trafic en pensant que la bande passante est réservée.

Dans la suite, nous considérons que les utilisateurs de service n'ont pas la connaissance de défaillances éventuelles du réseau. Ceci explique la décision de considérer que lorsqu'un utilisateur d'un service souhaite quitter le réseau, il doit libérer toutes ses réservations de service avant de quitter le réseau.

Dans l'exemple suivant, une défaillance de réseau est réparée en modifiant la topologie du réseau. Cette modification provoque des conflits entre réservations.

Dans cet exemple, le service est la bande passante.

D'autres exemples de services gérés par le gestionnaire de service peuvent être :
- Service de téléphonie : le service est l'ouverture de connections téléphoniques. La quantification du service serait le nombre de connexions autorisées sur un lien. La dégradation du service peut être la diminution du nombre de connexions autorisés.
- Services de vidéo à la demande : le service est de fournir une vidéo à partir d'un serveur vers un visionneur. La quantification du service pourrait être la qualité de la vidéo. La dégradation du service serait alors un serveur qui fournit toujours une vidéo mais de moins bonne qualité.
- Garantie du temps d'un trajet routier : le service est de donner le temps de trajet qui permet d'aller d'un point à un autre. La quantification du service pourrait être l'encombrement du réseau routier. La dégradation du service serait alors si des bouchons se forment.
- Service de transport de colis : le service serait d'assurer qu'un colis soit transporté d'une ville à une autre. La quantification du service serait le nombre de colis qui peuvent être transporté entre 2 villes. La dégradation du service serait la diminution du nombre maximum de colis transportés entre 2 villes.

Dans notre exemple, les liens sont Ethernet 100 Mbits/s à l'exception du lien entre les switchs (commutateurs) 3 et 4 qui est à 1 GBits/s.

La présente invention n'est pas limitée à la bande passante : elle s'applique également à d'autres types de service entre deux points d'un réseau sans boucle, par exemple ceux présentés ci-dessus.

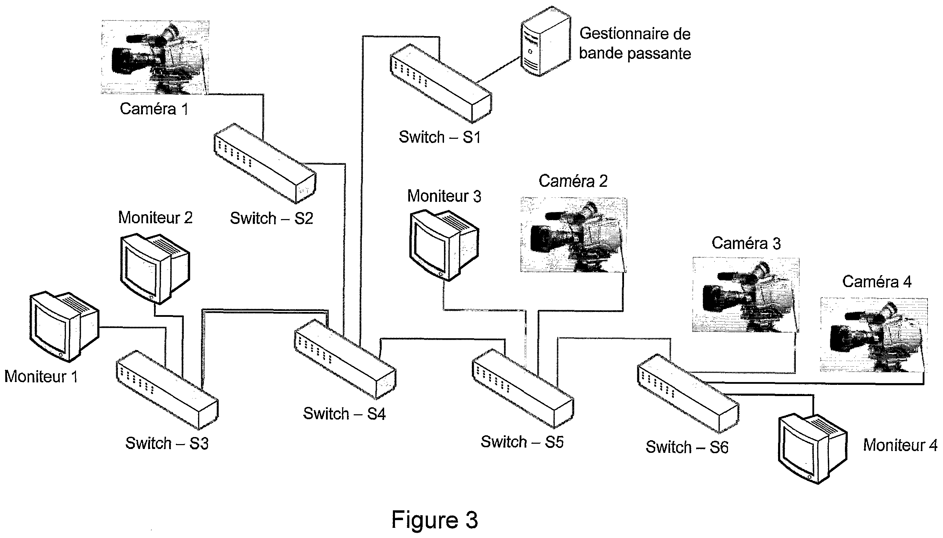

Dans le réseau de cet exemple, illustré Figure 3, des flux réservés ont été accordés par le gestionnaire de bande passante : de la caméra 4 au moniteur 4, de la caméra 3 au moniteur 3, de la caméra 2 au moniteur 2 et de la caméra 1 au moniteur 1.

Le tableau du gestionnaire de service (bande passante) est :

**Tableau 2**

| **Identité** | **Validité** | **Demandeur du service** | **Source** | **Destination** | **Quantité** |
|---|---|---|---|---|---|
| 1 | Valide | Caméra 1 | Caméra 1 | Moniteur 1 | 80 Mbits/s |
| 2 | Valide | Caméra 2 | Caméra 2 | Moniteur 2 | 80 Mbits/s |
| 3 | Valide | Caméra 3 | Caméra 3 | Moniteur 3 | 80 Mbits/s |
| 4 | Valide | Caméra 4 | Caméra 4 | Moniteur 4 | 80 Mbits/s |

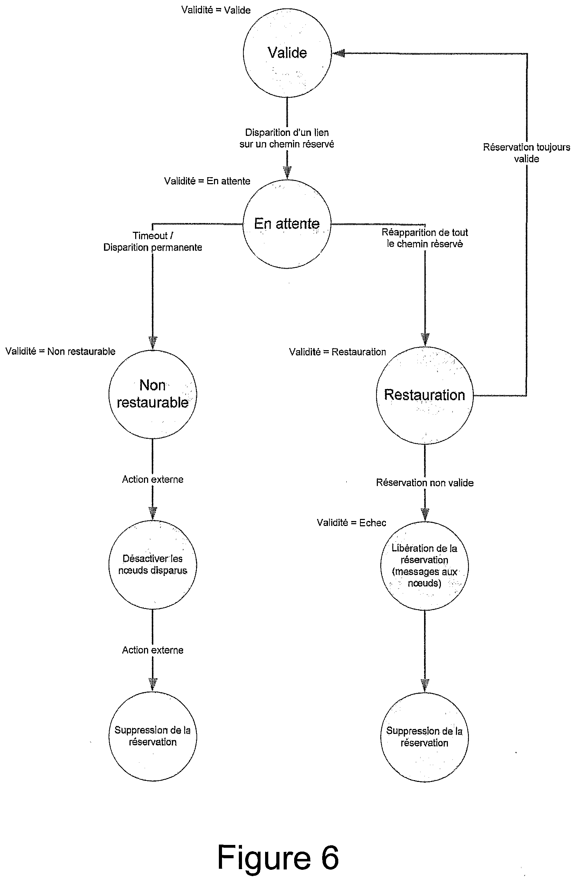

Les différentes étapes du procédé selon la présente invention sont illustrées Figure 6. Cette figure 6 représente la restauration d'une réservation lors d'une défaillance complète d'un lien ou d'un équipement.

Le procédé pour une dégradation progressive d'un lien ou d'un équipement est présenté par la suite.

### A - Défaillance complète.

Le diagramme d'état présenté dans cette figure décrit le fonctionnement d'une réservation. Les différentes réservations de l'exemple précédent (Tableau 2) se trouvent dans l'état initial : Valide.

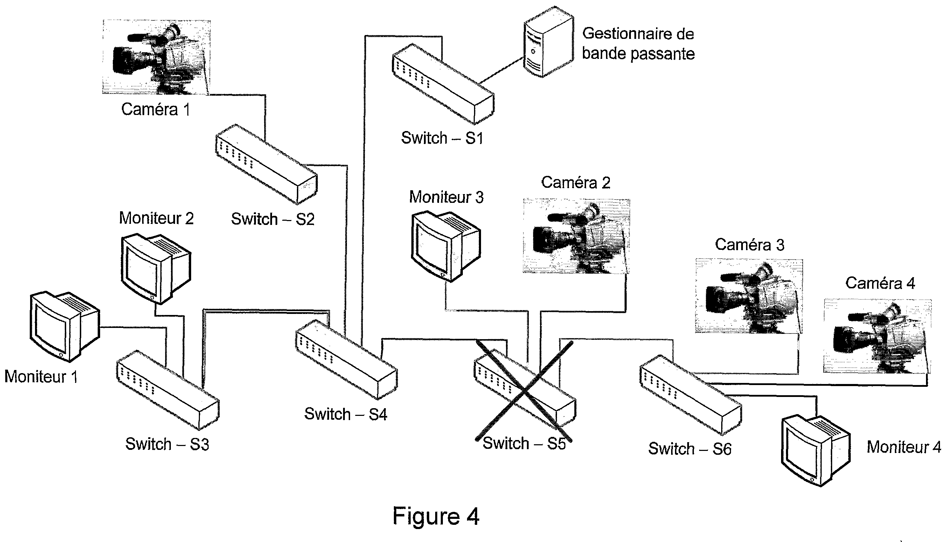

Ensuite, le switch (commutateur) 5 connaît une défaillance. Le gestionnaire de service / bande passante ne voit plus que la partie gauche du réseau : le switch 1, le switch 2, le switch 3, le switch 4, le moniteur 1, le moniteur 2 et la caméra 1. La défaillance du switch 5 est illustrée Figure 4.

Le gestionnaire de service / bande passante pourrait avoir choisi de supprimer de sa table toutes les réservations qui ont partiellement disparu de la topologie de réseau, c'est-à-dire seulement conserver la réservation 1. Toutefois, cette décision poserait quelques problèmes. En effet, la réservation 4 fonctionne toujours et donc, lorsque le réseau sera réparé, cette réservation ne devra pas être enlevée car elle a toujours fonctionné. Ainsi, afin d'indiquer que la réservation est peut être invalide mais que cela n'est pas connu, la valeur « Validité » doit être changée à « En attente ». La machine d'état (Figure 6) des réservations 2, 3 et 4 passe à l'état « En attente ». Les liens de la réservation 1 n'ont pas disparus, son état reste donc à « Valide ».

Ainsi, aucune entrée de réservation ne doit être effacée de la table du gestionnaire de services.

Le tableau du gestionnaire de services est maintenant :

**Tableau 3**

| **Identité** | **Validité** | **Demandeur du service** | **Source** | **Destination** | **Quantité** |
|---|---|---|---|---|---|
| 1 | Valide | Caméra 1 | Caméra 1 | Moniteur 1 | 80 Mbits/s |
| 2 | En attente | Caméra 2 | Caméra 2 | Moniteur 2 | 80 Mbits/s |
| 3 | En attente | Caméra 3 | Caméra 3 | Moniteur 3 | 80 Mbits/s |
| 4 | En attente | Caméra 4 | Caméra 4 | Moniteur 4 | 80 Mbits/s |

Tous les flux arrivant au switch 5 ont été routés sur le switch 2. Toutes les sources/destinations des réservations actuellement dans l'état « En attente » réapparaissent sur le réseau. Comme l'indique la machine d'état de la Figure 6, les réservations 2, 3 et 4 passent donc dans l'état « Restauration ». Cet état met la valeur « Validité » à « Restauration ».

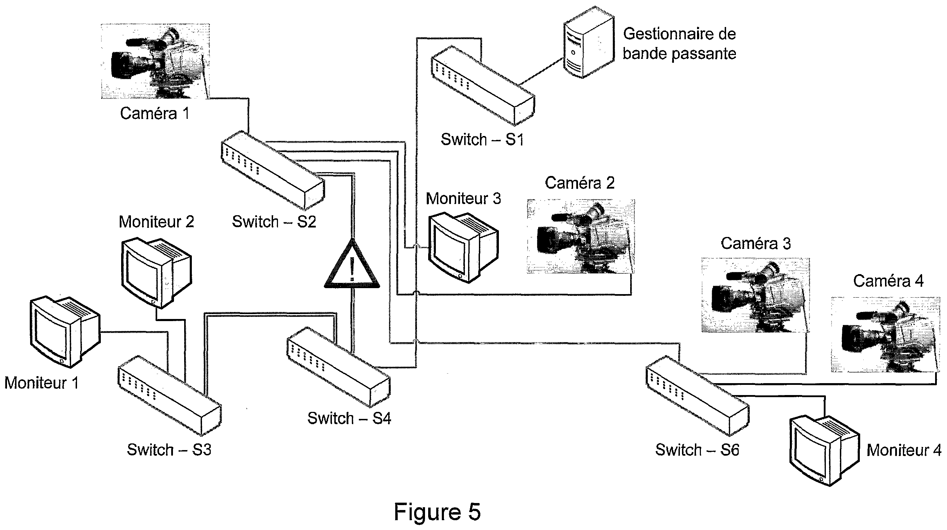

Le remaniement de la topologie du réseau est illustré Figure 5.

Une fois que le gestionnaire de services retrouve les équipements de réseau qui sont impliqués dans une réservation de service, il doit restaurer toutes les réservations « restaurables », c'est-à-dire celles pour lesquelles les deux noeuds de réseau et un chemin existent dans la topologie de réseau en cours. Bien entendu, si les deux noeuds de réseau ou bien un chemin n'existent pas, il n'est pas possible de réaliser d'opération sur la réservation.

Une réservation « non-restaurable » est détectée lorsque la disparition des deux noeuds de réseau et des chemins est considérée comme définitive. Ce caractère définitif peut-être déterminé à l'aide d'un délai de réapparition. Avant la détection du caractère définitif de la disparition, une réservation « non-restaurable » reste dans l'état « en attente ».

Les procédés appliqués pour un réservation « non-restaurable » sont décrit par la suite.

La première étape de la restauration est le traitement de toutes les réservations « restaurables ». Le gestionnaire de service doit valider les réservations qui sont valides et doit détecter les réservations impossibles.

Ainsi, le switch 6 peut être vu par le gestionnaire de services et la réservation 4 peut être re-validée en raison du fait que le chemin est le même qu'avant la défaillance. La bande passante est toujours disponible après le remaniement de topologie. La machine d'état de la réservation 4 revient donc dans l'état « Valide ». La valeur « Validité » est remise à « Valide ».

En ce qui concerne la réservation 3, un chemin existe toujours entre la source et la destination. La différence est que le flux passe à travers le switch 2 au lieu de passer par le switch 5. De même que pour la réservation 4, la réservation 3 peut donc être re-validée. Sa machine d'état revient dans l'état « Valide » et la valeur « Validité » est remise à « Valide ».

Le tableau du gestionnaire de services est maintenant :

**Tableau 4**

| **Identité** | **Validité** | **Demandeur du service** | **Source** | **Destination** | **Quantité** |
|---|---|---|---|---|---|
| 1 | Valide | Caméra 1 | Caméra 1 | Moniteur 1 | 80 Mbits/s |
| 2 | Restauration | Caméra 2 | Caméra 2 | Moniteur 2 | 80 Mbits/s |
| 3 | Valide | Caméra 3 | Caméra 3 | Moniteur 3 | 80 Mbits/s |
| 4 | Valide | Caméra 4 | Caméra 4 | Moniteur 4 | 80 Mbits/s |

La réservation 2 pose quelques problèmes, c'est une réservation « impossible ». Même si le gestionnaire de services avait envoyé une demande de libération à la caméra 2, cette dernière ne l'aurait pas reçue avant d'être connectée au réseau. Ainsi, la caméra dispose de suffisamment de temps pour envoyer le flux à travers la nouvelle topologie de réseau, avant de recevoir la demande de libération du gestionnaire. Dans ce cas, le lien à 100 Mbits/s entre le switch 2 et le switch 4 ne peut pas supporter deux flux de 80 Mbits/s. Ici, deux flux (réservations 1 et 2) ne seront pas correctement transportés. Le service n'est plus assuré pour la réservation 1 qui n'avait pas été affectée par la défaillance du switch 5 avant le remaniement de la topologie.

Une réservation impossible est une réservation « restaurable » qui est impossible à assurer dans la nouvelle topologie de réseau. Ces réservations doivent être notées dans l'état « Echec ».

Dans notre exemple, le tableau du gestionnaire de service est maintenant :

**Tableau 5**

| **Identité** | **Validité** | **Demandeur du service** | **Source** | **Destination** | **Quantité** |
|---|---|---|---|---|---|
| 1 | Valide | Caméra 1 | Caméra 1 | Moniteur 1 | 80 Mbits/s |
| 2 | Echec | Caméra 2 | Caméra 2 | Moniteur 2 | 80 Mbits/s |
| 3 | Valide | Caméra 3 | Caméra 3 | Moniteur 3 | 80 Mbits/s |
| 4 | Valide | Caméra 4 | Caméra 4 | Moniteur 4 | 80 Mbits/s |

L'étape suivante consiste à demander la libération des réservations notées dans l'état « Echec » de manière à établir un fonctionnement cohérent du système de réservation de service.

Dans notre exemple, le gestionnaire de service doit demander une libération pour la réservation 2 car le lien ne peut supporter cette réservation sur le lien entre les commutateurs 2 et 4, en raison de l'existence de la réservation 1. Une fois que la libération de la réservation 2 est effectuée, le gestionnaire de réservation supprime la réservation de son tableau. Le système de réservation de service est de nouveau cohérent et le tableau ne contient plus de réservation dans l'état « En attente » ou bien dans l'état « Echec » : la réservation de service est à nouveau assurée.

Dans notre exemple, le tableau du gestionnaire de service est maintenant :

**Tableau 6**

| **Identité** | **Validité** | **Demandeur du service** | **Source** | **Destination** | **Quantité** |
|---|---|---|---|---|---|
| 1 | Valide | Caméra 1 | Caméra 1 | Moniteur 1 | 80 Mbits/s |
| 3 | Valide | Caméra 3 | Caméra 3 | Moniteur 3 | 80 Mbits/s |
| 4 | Valide | Caméra 4 | Caméra 4 | Moniteur 4 | 80 Mbits/s |

La seconde étape de la restauration du système de réservation de service est l'activation des réservations « non-restaurables ». Ceci est la situation dans laquelle des noeuds d'une réservation de service ne reviennent pas dans la topologie du réseau.

Une fois cette disparition considérée comme définitive, la machine d'état de la réservation passe dans l'état « Non restaurable ». Ce cas ne peut être traité de façon automatique par le gestionnaire de service.

Les différentes étapes du procédé selon la présente invention sont illustrées Figure 6.

Une décision externe doit libérer ces réservations. On entend par décision externe, au sens de la présente invention, une décision provenant d'une personne physique ou d'un module qui possède plus de connaissance et un degré de commande plus important sur le type de service, de façon à pouvoir gérer les étapes suivantes, qui sont :
1. S'assurer que les deux utilisateurs de service ont libéré l'utilisation de leur réservation de service avant de les connecter à nouveau sur le réseau.
2. Supprimer la réservation au niveau du gestionnaire de service.

La « décision externe » doit assurer la cohérence des informations sur les différents dispositifs impliqués dans les réservations à libérer.

### B - Dégradation progressive

Grâce au procédé selon la présente invention, il est possible de restaurer un système de réservation de service après des défaillances de réseau. Ces défaillances, au sens de la présente invention, peuvent être des défaillances complètes d'un lien ou d'un équipement, mais également une dégradation d'un lien ou d'un équipement.

Cette approche progressive de la dégradation permet de gérer des cas dans lesquels le réseau perd progressivement les moyens d'assurer un service, atteignant un point où les réservations de service accordées ne sont plus garanties.

Le gestionnaire de service assure les réservations de service en se basant sur l'état du réseau au moment de la réservation de service. Comme l'état du réseau évolue avec le temps, certains paramètres sensibles pour la réservation de service peuvent se dégrader. Il existe un problème dès lors que la dégradation de ces paramètres acquiert une importance telle que le service ne peut plus être assuré sur le lien du réseau en question.

Une dégradation du réseau doit être traitée différemment d'une complète défaillance du réseau pour les deux raisons suivantes :
- La dégradation est progressive et peut être identifiée avant que la réservation ne soit en état d'échec. Ceci pourrait permettre d'obtenir une décision externe afin de remédier à cette dégradation.
- On peut dans ce cas remédier à la défaillance de réseau. On est dans le cas « activable » car il y existe toujours une connexion réseau entre le gestionnaire de service et le demandeur de la réservation de service.

Si des paramètres sensibles sont des paramètres liés à la topologie du réseau, le gestionnaire de service peut détecter une dégradation gênante et notifie les deux noeuds de la réservation de service liés à cette dégradation.

Si une dégradation du réseau devient si importante qu'une réservation est en état d'échec, le système de réservation de service restaure cette réservation « activable ». Tant que le lien de réseau n'est pas complètement défaillant, le trafic de gestion est transporté sur ce lien car il possède la priorité la plus haute. Les communications entre le gestionnaire de service et le demandeur sont les suivantes :
- Le gestionnaire de service envoie une requête pour libérer la réservation de service défaillante. Le demandeur ne peut refuser cette requête.
- Le demandeur libère la réservation de service en cessant d'utiliser la réservation de service et envoie ensuite un message d'acquittement indiquant que la réservation a été libérée.
- Le gestionnaire de service peut mettre à jour son tableau interne.

Le système de réservation de service a été restauré suite à la défaillance de la réservation de service due à la dégradation.

L'invention est décrite dans ce qui précède à titre d'exemple. Il est entendu que l'homme du métier est à même de réaliser différentes variantes de l'invention sans pour autant sortir du cadre du brevet. L' étendue de la revendication est définie par les revendications.

## Revendications

1. Procédé de restauration d'un système centralisé de réservation de service localisé sur un noeud d'un réseau sans boucle après une détection d'une défaillance dudit réseau par ledit système, ladite défaillance du réseau étant une modification dans la topologie du réseau qui rend complètement inutilisable(s) un ou plusieurs lien(s) du réseau, ledit système étant agencé pour assurer des services chacun sur un chemin du réseau entre deux noeuds dudit réseau sans boucle, la réservation des services assurés par ledit système étant dans un état « valide » avant ladite défaillance, ledit procédé comprenant
une première étape consistant à mettre dans un état « en attente » les réservations qui ont disparu de la topologie du réseau après ladite défaillance ; ledit procédé étant **caractérisé en ce qu'**il comprend en outre:
une seconde étape consistant à mettre dans un état « restauration » les réservations précédemment dans l'état « en attente » pour lesquelles les deux noeuds de réseau et un chemin existent dans la topologie du réseau après ladite défaillance;
une troisième étape consistant à remettre dans un état « valide » les réservations précédemment dans l'état « restauration » pour lesquelles une réservation est possible dans la topologie du réseau après ladite défaillance ;
une quatrième étape consistant à mettre dans un état « Echec » les réservations précédemment dans l'état « restauration » pour lesquelles une réservation est impossible à assurer dans la topologie du réseau après ladite défaillance ;
une cinquième étape consistant à mettre dans un état « non-restaurable » les réservations précédemment dans l'état « en attente » pour lesquelles les noeuds ont disparu dans la topologie du réseau après ladite défaillance.

2. Procédé de restauration d'un système de réservation de service d'un réseau selon la revendication 1, **caractérisé en ce que** la mise dans un état « non-restaurable » des réservations est réalisée après un délai prédéterminé.

3. Procédé de restauration d'un système de réservation de service d'un réseau selon l'une des revendications précédentes, **caractérisé en ce qu'**il comporte en outre une étape de libération des réservations non-restaurables par une action externe.

4. Procédé de restauration d'un système de réservation de service d'un réseau selon la revendication 3 **caractérisé en ce que** ladite action externe est réalisée manuellement par une personne physique.

5. Procédé de restauration d'un système de réservation de service d'un réseau selon la revendication 3, **caractérisé en ce que** ladite action externe est réalisée par un module externe.

6. Procédé de restauration d'un système de réservation de service d'un réseau selon l'une des revendications précédentes, **caractérisé en ce qu'**il comporte en outre une étape de libération des réservations « en échec ».

7. Dispositif de restauration d'un système centralisé de réservation de service localisé sur un noeud d'un réseau sans boucle après une détection d'une défaillance dudit réseau par ledit système, ladite défaillance du réseau étant une modification dans la topologie du réseau qui rend complètement inutilisable(s) un ou plusieurs lien (s) du réseau, ledit système étant agencé pour assurer des services chacun sur un chemin du réseau entre deux noeuds dudit réseau sans boucle, la réservation des services assurés par ledit système étant dans un état « valide » avant ladite défaillance, ledit dispositif comprenant
des moyens pour mettre dans un état « en attente » les réservations qui ont disparu de la topologie du réseau après ladite défaillance ; ledit dispositif étant **caractérisé en ce qu'**il comprend en outre:
des moyens pour mettre dans un état « restauration » les réservations précédemment dans l'état « en attente » pour lesquelles les deux noeuds de réseau et un chemin existent dans la topologie du réseau après ladite défaillance;
des moyens pour remettre dans un état « valide » les réservations précédemment dans l'état « restauration » pour lesquelles une réservation est possible dans la topologie du réseau après ladite défaillance ;
des moyens pour mettre dans un état « Echec » les réservations précédemment dans l'état « restauration » pour lesquelles une réservation est impossible à assurer dans la topologie du réseau après ladite défaillance ;
des moyens pour mettre dans un état « non-restaurable » les réservations précédemment dans l'état « en attente » pour lesquelles les noeuds ont disparu dans la topologie du réseau après ladite défaillance.

8. Dispositif selon la revendication 7, **caractérisé en ce que** la mise dans un état « non-restaurable » des réservations est réalisée après un délai prédéterminé.

9. Dispositif selon la revendication 7 ou 8, **caractérisé en ce qu'**il comporte en outre des moyens pour libérer les réservations non-restaurables par une action externe.

10. Dispositif selon la revendication 9 **caractérisé en ce que** ladite action externe est réalisée manuellement par une personne physique.

11. Dispositif selon la revendication 9, **caractérisé en ce que** ladite action externe est réalisée par un module externe.

12. Dispositif selon l'une des revendications 7 à 11, **caractérisé en ce qu'**il comporte en outre une étape de libération des réservations « en échec ».

## Patentansprüche

1. Verfahren zur Wiederherstellung eines zentralisierten Dienst-Reservierungssystems, das auf einem Knoten eines schleifenfreien Netzwerks angeordnet ist, nach Feststellung eines Ausfalls des besagten Netzwerks durch das besagte System, wobei der besagte Ausfall des Netzwerks eine Veränderung in der Topologie des Netzwerks ist, die eine oder mehrere Verbindung(en) des Netzwerks vollständig unbrauchbar macht, wobei das besagte System dazu eingerichtet ist, Dienste jeweils auf einem Pfad des Netzwerks zwischen zwei Knoten des besagten schleifenfreien Netzwerks bereitzustellen, und wobei die Reservierung der durch das besagte System bereitgestellten Dienste sich vor dem besagten Ausfall in einem "gültigen" Zustand befindet, wobei das besagte Verfahren umfasst:
einen ersten Schritt, der darin besteht, die Reservierungen, die nach dem besagten Ausfall aus der Topologie des Netzwerks verschwunden sind, in einen "Warte-"Zustand zu versetzen; wobei das besagte Verfahren **dadurch gekennzeichnet ist, dass** es des Weiteren umfasst:
einen zweiten Schritt, der darin besteht, die vorher in dem "Warte-"Zustand befindlichen Reservierungen, für welche die beiden Netzwerkknoten und ein Pfad in der Topologie des Netzwerks nach dem besagten Ausfall vorhanden sind, in einen "Wiederherstellungs-"Zustand zu versetzen;
einen dritten Schritt, der darin besteht, die vorher in dem "Wiederherstellungs-"Zustand befindlichen Reservierungen, für welche eine Reservierung in der Topologie des Netzwerks nach dem besagten Ausfall möglich ist, in einen "gültigen" Zustand zurückzuversetzen;
einen vierten Schritt, der darin besteht, die vorher in dem "Wiederherstellungs-"Zustand befindlichen Reservierungen, für welche es unmöglich ist, eine Reservierung in der Topologie des Netzwerks nach dem besagten Ausfall bereitzustellen, in einen "Fehler-"Zustand zu versetzen;
einen fünften Schritt, der darin besteht, die vorher in dem "Warte-"Zustand befindlichen Reservierungen, für welche die Knoten in der Topologie des Netzwerks nach dem besagten Ausfall verschwunden sind, in einen "nicht wiederherstellbaren" Zustand zu versetzen.

2. Verfahren zur Wiederherstellung eines Dienst-Reservierungssystems eines Netzwerks nach Anspruch 1, **dadurch gekennzeichnet, dass** die Versetzung in einen "nicht wiederherstellbaren" Zustand der Reservierungen nach einer vorher bestimmten Frist durchgeführt wird.

3. Verfahren zur Wiederherstellung eines Dienst-Reservierungssystems eines Netzwerks nach einem der vorstehenden Ansprüche, **dadurch gekennzeichnet, dass** es des Weiteren einen Schritt zur Freigabe der nicht wiederherstellbaren Reservierungen durch eine externe Aktion umfasst.

4. Verfahren zur Wiederherstellung eines Dienst-Reservierungssystems eines Netzwerks nach Anspruch 3, **dadurch gekennzeichnet, dass** die besagte externe Aktion manuell durch eine natürliche Person ausgeführt wird.

5. Verfahren zur Wiederherstellung eines Dienst-Reservierungssystems eines Netzwerks nach Anspruch 3, **dadurch gekennzeichnet, dass** die besagte externe Aktion durch ein externes Modul ausgeführt wird.

6. Verfahren zur Wiederherstellung eines Dienst-Reservierungssystems eines Netzwerks nach einem der vorstehenden Ansprüche, **dadurch gekennzeichnet, dass** es des Weiteren einen Schritt zur Freigabe der "Fehler"-Reservierungen umfasst.

7. Vorrichtung zur Wiederherstellung eines zentralisierten Dienst-Reservierungssystems, das auf einem Knoten eines schleifenfreien Netzwerks angeordnet ist, nach einer Feststellung eines Ausfalls des besagten Netzwerks durch das besagte System, wobei der besagte Ausfall des Netzwerks eine Veränderung in der Topologie des Netzwerks ist, die eine oder mehrere Verbindung(en) des Netzwerks vollständig unbrauchbar macht, wobei das besagte System dazu eingerichtet ist, Dienste jeweils auf einem Pfad des Netzwerks zwischen zwei Knoten des besagten schleifenfreien Netzwerks bereitzustellen, und wobei die Reservierung der durch das besagte System bereitgestellten Dienste sich vor dem besagten Ausfall in einem "gültigen" Zustand befindet, wobei die besagte Vorrichtung umfasst:
Mittel, um die Reservierungen, die nach dem besagten Ausfall aus der Topologie des Netzwerks verschwunden sind, in einen "Warte-"Zustand zu versetzen, wobei die besagte Vorrichtung **dadurch gekennzeichnet ist, dass** sie des Weiteren umfasst:
Mittel, um die vorher in dem "Warte-"Zustand befindlichen Reservierungen, für welche die beiden Netzwerkknoten und ein Pfad in der Topologie des Netzwerks nach dem besagten Ausfall vorhanden sind, in einen "Wiederherstellungs-"Zustand zu versetzen;
Mittel, um die vorher in dem "Wiederherstellungs-"Zustand befindlichen Reservierungen, für welche eine Reservierung in der Topologie des Netzwerks nach dem besagten Ausfall möglich ist, in einen "gültigen" Zustand zurückzuversetzen;
Mittel, um die vorher in dem "Wiederherstellungs-"Zustand befindlichen Reservierungen, für welche es unmöglich ist, eine Reservierung in der Topologie des Netzwerks nach dem besagten Ausfall bereitzustellen, in einen "Fehler"-Zustand zu versetzen;
Mittel, um die vorher in dem "Warte-"Zustand befindlichen Reservierungen, für welche die Knoten in der Topologie des Netzwerks nach dem besagten Ausfall verschwunden sind, in einen "nicht wiederherstellbaren" Zustand zu versetzen.

8. Vorrichtung nach Anspruch 7, **dadurch gekennzeichnet, dass** die Versetzung in einen "nicht wiederherstellbaren" Zustand der Reservierungen nach einer vorher bestimmten Frist durchgeführt wird.

9. Vorrichtung nach Anspruch 7 oder 8, **dadurch gekennzeichnet, dass** sie des Weiteren Mittel umfasst, um die nicht wiederherstellbaren Reservierungen durch eine externe Aktion freizugeben.

10. Vorrichtung nach Anspruch 9, **dadurch gekennzeichnet, dass** die besagte externe Aktion manuell durch eine natürliche Person ausgeführt wird.

11. Vorrichtung nach Anspruch 9, **dadurch gekennzeichnet, dass** die besagte externe Aktion durch ein externes Modul ausgeführt wird.

12. Vorrichtung nach einem der Ansprüche 7 bis 11, **dadurch gekennzeichnet, dass** sie des Weiteren einen Schritt zur Freigabe der "Fehler"-Reservierungen umfasst.

## Claims

1. Method for restoration of a centralised service reservation system located on a node of a loop-free network following the detection of a failure of said network by said system, said network failure being a modification in the network topology rendering one or several network link or links completely inoperable, said system being arranged to deliver services each on a path of the network between two nodes of said network without a loop, the reservation of services delivered by said system being in a "valid" state prior to said failure, said method comprising
a first step consisting in placing the reservations that have disappeared from the network topology following said failure in a "standby" state; said method being **characterised in that** it further comprises:
a second step consisting in placing reservations previously in the "standby" state for which the two network nodes and a path exist in the network topology following said failure in the "restoration" state;
a third step consisting in placing reservations previously in the "restoration" state for which a reservation is possible in the network topology following said failure in a "valid" state;
a fourth step consisting in placing reservations previously in the "restoration" state for which a reservation is impossible to perform in the network topology following the failure in an "Error" state;
a fifth step consisting in placing reservations previously in the "standby" state for which the nodes have disappeared from the network topology following said failure in a "non-restorable" state;

2. Method for restoration of a network service reservation system according to claim 1, **characterized in that** the placement of the reservations in the "non-restorable" state occurs following a predetermined time frame.

3. Method for restoration of a network service reservation system according to any one of the preceding claims, **characterized in that** it also comprises a step for the release of non-restorable reservations by an external action.

4. Method for restoration of a network service reservation system according to claim 3, **characterized in that** said external action occurs manually by a natural person.

5. Method for restoration of a network service reservation system according to claim 3, **characterized in that** said external action occurs by an external module.

6. Method for restoration of a network service reservation system according to any one of the preceding claims, **characterized in that** it also comprises a step for the release of "failed" reservations.

7. Device for restoration of a centralised service reservation system located on a node of a loop-free network following the detection of a failure of said network by said system, said network failure being a modification in the network topology rendering one or several network link or links completely inoperable, said system being arranged to deliver services each on a path of the network between two nodes of said loop-free network, the reservation of services delivered by said system being in a "valid" state prior to said failure, said device comprising
means for placing reservations that have disappeared from the network topology following said failure in a "standby" state; said
device being **characterized in that** it further comprises:
means for placing reservations previously in the "standby" state for which the two network nodes and a path exist in the network topology following said failure in the "restoration" state;
means for placing reservations previously in the "restoration" state for which a reservation is possible in the network topology following said failure in a "valid" state;
means for placing reservations previously in the "restoration" state for which a reservation is impossible to perform in the network topology following said failure in an "Error" state;
means for placing reservations previously in the "standby" state for which the nodes have disappeared from the network topology following said failure in a "non-restorable" state.

8. Device according to claim 7, **characterized in that** the placement of the reservations in the "non-restorable" state occurs following a predetermined time frame.

9. Device according to claim 7 or 8, **characterized in that** it also comprises means for releasing non-restorable reservations by an external action.

10. Device according to claim 9, **characterized in that** said external action occurs manually by a natural person.

11. Device according to claim 9, **characterized in that** said external action occurs by an external module.

12. Device according to one of claims 7 to 11, **characterized in that** it further comprises a step for releasing "failed" reservations.
